# DEMANDE DE BREVET EUROPEEN

(11) **EP 0 697 604 A1**
(43) Date de publication de la demande: **21.02.1996**
(21) Numéro de dépôt: 95401563.2
(22) Date de dépôt: 29.06.1995
(51) Int. Cl.: G01V 3/20, G01N 33/24, E21D 9/06

(54) **Procédé et système de reconnaissance des terrains à l'avant d'une machine d'excavation**

(30) Priorité: 03.08.1994 FR 9409616
(71) Demandeur: F C B, F-93100 Montreuil Cédex (FR)
(72) Inventeur: Simon, Christophe, F-59370 Mons en Baroeul (FR)
(74) Mandataire: Fontanié, Etienne

(57) **Abrégé**

L'invention a pour objet un procédé et un système de reconnaissance des terrains à l'avant d'une machine d'excavation.

Pour permettre l'investigation quasi continue, sans perturber la marche de la machine d'excavation, du volume de terrain à l'avant de la machine et la localisation des zones où les caractéristiques des terrains présentent des anomalies, on mesure la résistance du terrain à l'avant de la machine d'excavation, on établit, à partir de ces mesures, des cartes d'iso-résistivité dans différents plans, on mesure les contraintes mécaniques sur un outil de coupe et on en déduit les caractéristiques géotechniques du terrain sur le front de taille, on mesure sa résistivité et on établit une ou plusieurs relations entre cette dernière et les caractéristiques géotechniques du terrain, et on détermine les caractéristiques du terrain à l'avant de la machine en utilisant cette ou ces relations et les cartes d'iso-résistivité.

## Description

La présente invention décrit un procédé et un système composite destinés à la reconnaissance des caractéristiques des terrains à l'avant d'une machine d'excavation, par exemple du type tunnelier à confinement, notamment pour localiser des obstacles ou des variations dans la nature des terrains.

Lors du creusement d'un ouvrage souterrain à l'aide d'une machine d'excavation, il est primordial d'avoir une connaissance la plus précise possible des variations des caractéristiques du terrain à l'avant du front de taille. Ces variations peuvent être brutales ou progressives et peuvent être dues à la présence de vides ou de zones dont la nature est très différente de celle du terrain qui les entoure (blocs erratiques, poches d'argile) ou bien encore être le résultat des conditions de formation géologique.

La localisation de ces anomalies est d'une très grande importance pour la sécurité des travaux d'excavation, notamment lorsque ceux-ci s'effectuent dans des terrains karstifiés, mais aussi pour l'organisation du chantier qui peut ainsi anticiper les difficultés de creusement en fonction de la nature prévue des terrains.

Actuellement, le seul moyen de reconnaissance mis en oeuvre à partir de la machine d'excavation, consiste à effectuer des forages de reconnaissance destructifs. Les paramètres de fonctionnement des foreuses mises en oeuvre à cette occasion sont enregistrés puis analysés pour permettre la localisation d'éventuelles anomalies géologiques. Toutefois, cette méthode d'investigation est très lourde à mettre en oeuvre et d'un coût élevé. De plus, un forage n'apporte qu'une information ponctuelle et la reconnaissance d'un volume nécessite plusieurs forages et ne peut pas être effectué de manière continue pendant le creusement d'un tunnel ou d'une galerie.Il est donc intéressant de mettre en oeuvre une méthode géophysique, non destructive et dont l'utilisation est moins contraignante.

Parmi les méthodes de prospection géophysiques non destructives, celle fondée sur des mesures de la conductivité électrique des terrains sont celles qui présentent les plus grandes possibilités. En effet, les roches et les sols sont, à de très rares exceptions près, imprégnés d'eau ce qui leur confère une certaine conductivité qui est notamment influencée par la fracturation ou la porosité des terrains.

L'invention a pour but de permettre l'investigation quasi continue, sans perturber la marche de la machine d'excavation, d'un volume de terrain en avant de la machine, pour localiser les zones où les caractéristiques du terrain présentent des anomalies.

Elle a pour objet un procédé de reconnaissance des terrains à l'avant d'une machine d'excavation consistant à :
- mesurer la résistance du terrain à l'avant de la machine d'excavation à l'aide d'un ou plusieurs couples d'électrodes placés sur ou à proximité du tunnelier,
- établir, à partir de ces mesures, des cartes donnant des informations sur la résistivité du terrain dans différents plans, verticaux, horizontaux ou obliques, à l'avant de la machine,
- mesurer les contraintes mécaniques sur un outil de coupe de la machine d'excavation, et déduire de ces mesures les caractéristiques géotechniques du terrain sur le front de taille,
- mesurer la résistivité du terrain au voisinage immédiat de l'outil de coupe,
- établir une ou plusieurs relations entre la résistivité du terrain au voisinage de l'outil de coupe et les caractéristiques géotechniques du terrain sur le front de taille, et
- déterminer les caractéristiques géotechniques du terrain à l'avant de la machine, en appliquant la ou lesdites relations aux informations données par lesdites cartes.

L'invention a également pour objet un système pour la mise en oeuvre de ce procédé comportant :
- un dispositif pour mesurer la résistance électrique du terrain à l'avant de la machine d'excavation ;
- un dispositif pour mesurer les contraintes mécaniques sur un outil de coupe de la machine d'excavation ;
- un dispositif pour mesurer la résistivité du terrain au voisinage immédiat dudit outil de coupe, et
- un système informatique comprenant :
   - un premier sous-système pour l'établissement des cartes d'iso-résistivité à partir des mesures de résistance du terrain ;
   - un deuxième sous-système pour déterminer les caractéristiques géotechniques du terrain sur le front de taille, à partir des mesures de contraintes mécaniques sur l'outil de coupe ;
   - un troisième sous-système permettant d'établir une ou plusieurs relations entre la résistivité du terrain sur le front de taille et ses caractéristiques géotechniques, et
   - un quatrième sous-système permettant de déterminer les caractéristiques géotechniques du terrain à l'avant du tunnelier à partir des cartes d'iso-résistivité, en utilisant la ou lesdites relations.

D'autres caractéristiques de l'invention apparaitront à la lecture de la description qui suit et se réfère aux dessins l'accompagnant qui montrent, à titre d'exemple non limitatif, une forme de réalisation de l'invention et sur lesquels :
La figure 1 illustre le principe de la mesure de la résistance d'un terrain ;
La figure 2 est un schéma montrant le volume de terrain affecté par une mesure de la résistance au moyen d'électrodes placées sur ou à proximité du tunnelier ;
La figure 3 est un schéma montrant les volumes de terrain intéressés par les mesures de résistance suivant la position du tunnelier ;
La figure 4 est une vue partiellement en élévation et partiellement en coupe d'un outil de coupe du tunnelier et de son support ;
La figure 5 est une représentation schématique de l'outil montrant les efforts auxquels l'outil est soumis lorsque le tunnelier est en marche ;
La figure 6 est le schéma d'un système de télé-transmission des signaux fournis par les capteurs de mesure des contraintes mécaniques sur l'outil ;
La figure 7 illustre une méthode d'enregistrement des données fournies par les capteurs de l'outil de coupe ; et
La figure 8 est le schéma électrique du système de mesure de la résistivité du terrain au voisinage immédiat de l'outil de coupe.

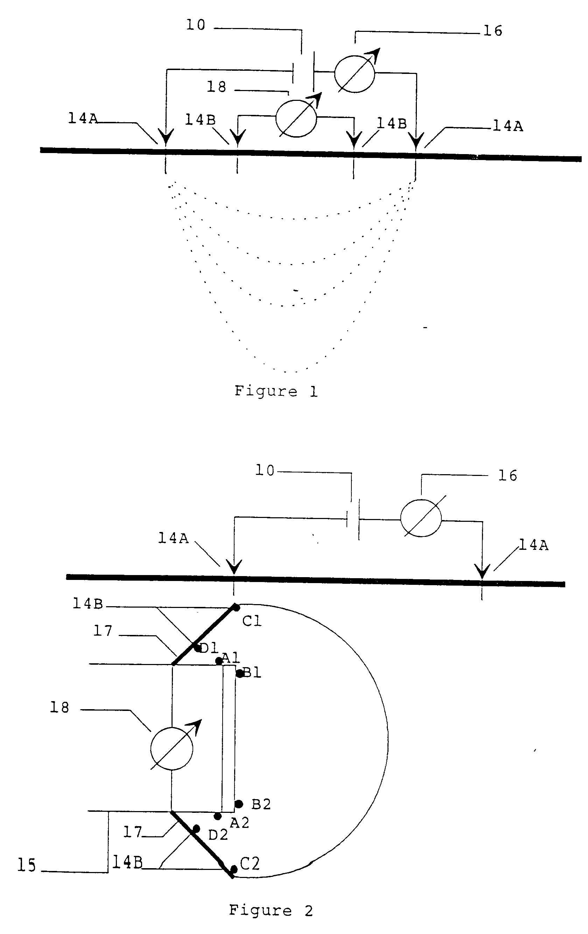

Le système électrique dont le principe est illustré par la figure 1 comporte une source de courant électrique, continu ou alternatif 10, dont chacune des bornes est reliée à une électrode d'injection de courant 14a. Ces électrodes 14a sont implantées indifféremment en surface ou à différentes profondeurs dans le sol, dans un puits ou un forage, et peuvent être disposées à l'horizontale, à la verticale ou à l'oblique. Ce système comporte, en outre, un ampèremètre 16 permettant de mesurer le courant total injecté dans le terrain à l'aide des électrodes 14a. La résistance des terrains est mesurée à l'aide d'un ou plusieurs couples d'électrodes de mesure 14b et d'un voltmètre 18.

Les électrodes 14b peuvent être placées sur la structure du tunnelier 15, par exemple en A1-A2 (figure 2), ou sur le disque de coupe, en B1-B2, ou montées à l'extrémité de tiges 17 enfoncées dans le sol depuis l'intérieur du tunnelier, pendant les périodes d'arrêt pour la mise en place du revêtement, comme indiqué en C1-C2 ou D1-D2 sur la figure 2.

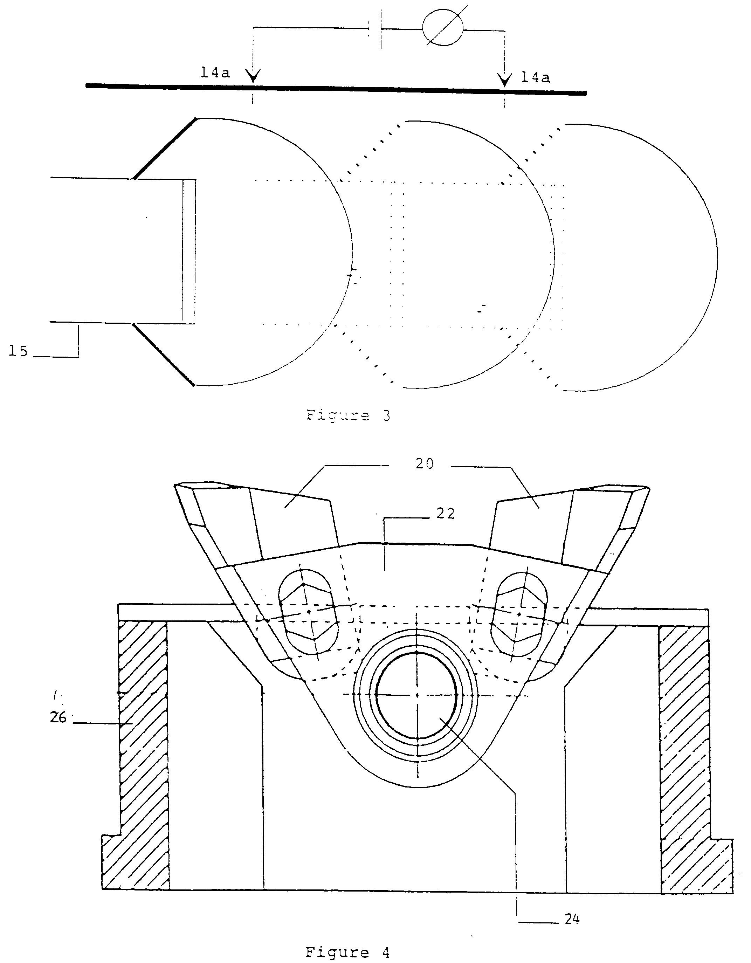

La résistance du terrain à l'avant du tunnelier est calculée à partir des indications de l'ampèremètre 16 et du voltmètre 18. Pour donner une indication sur la valeur du terrain interessé par cette mesure, on l'a limité symboliquement par un arc de cercle sur les figures 2 et 3.

L'ensemble des valeurs obtenues est soumis à un traitement mathématique s'appuyant sur la méthode des éléments finis, d'une part, et sur les raisonnements d'interprétation classique de prospection par géophysique électrique,d'autre part, et permettant d'établir des cartes d'iso-résistivité dans le volume à l'avant de la machine d'excavation. Ces cartes pourront représenter des coupes verticales, horizontales ou obliques du volume investigué.

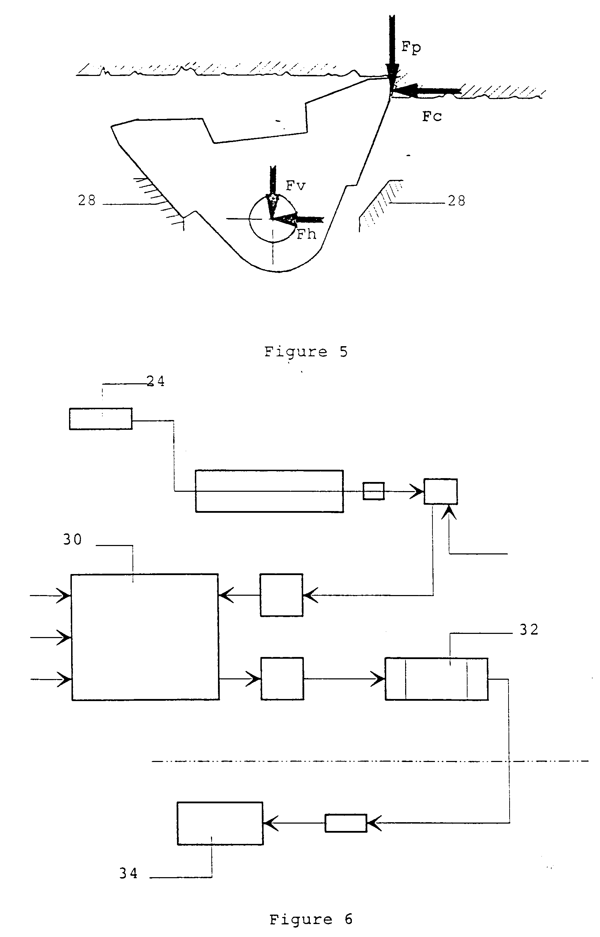

Pour déterminer les caractéristiques géotechniques du terrain sur le front de taille, on mesure deux composantes de l'effort s'exerçant pendant le creusement sur un outil de coupe du tunnelier. Pour cela, on utilise l'ensemble représenté sur les figures 4 et 5. Cet ensemble comporte deux outils 20 fixés sur un porte-outil double 22 qui est monté pivotant sur un axe 24 solidaire d'un support annulaire 26 destiné à être fixé sur le disque de coupe du tunnelier. La rotation du porte-outil 22 autour de l'axe 24 est limitée par des butées 28 du support 26, de sorte que le porte-outil a deux positions d'équilibre stables permettant l'utilisation de l'un ou l'autre des outils, suivant le sens de rotation du disque de coupe. Des jauges de contraintes montées sur l'axe 24 permettent de mesurer les forces Fh et Fv, respectivement parallèles et perpendiculaires au front de taille et de déterminer les composantes parallèle au front de taille, Fc, et perpendiculaire au front de taille, Fp, des efforts s'exerçant sur l'outil en service, pendant le creusement.

Un système informatique, dont le schéma est représenté sur la figure 6, permet d'acquérir l'ensemble des données de fonctionnement du tunnelier ainsi que les signaux provenant des jauges de contrainte de l'axe 24. Ces signaux sont transmis à un automate 30 relié à un ordinateur 32 équipant le poste de commande du tunnelier et lui-même relié à un ordinateur 34, placé dans une salle de surveillance, par un système de télé-transmission.

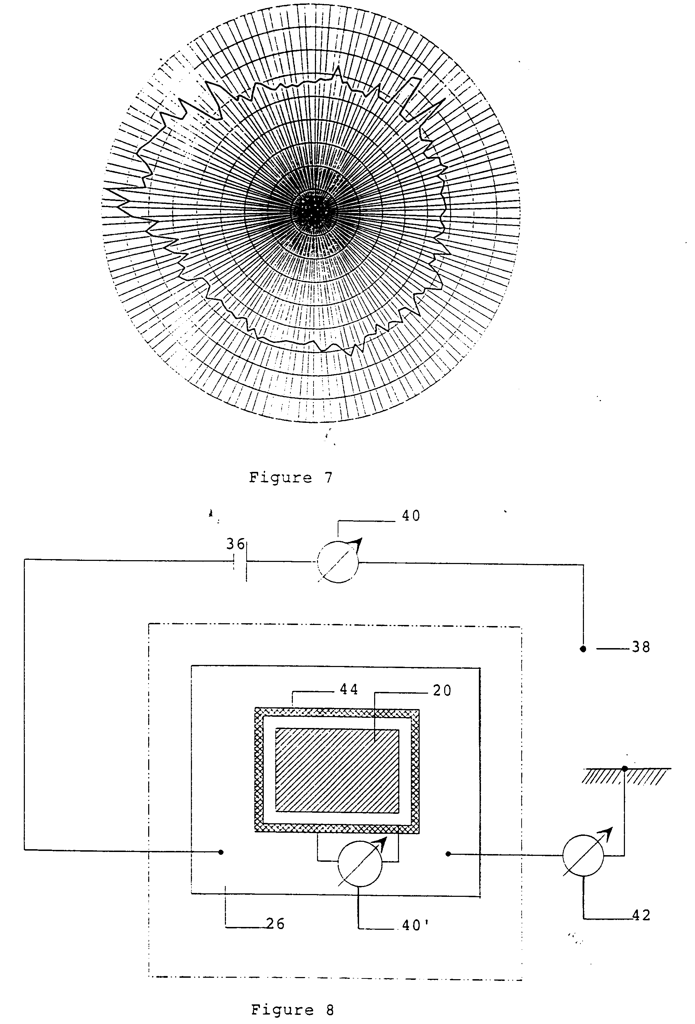

Une représentation en coordonnées polaires de l'amplitude des efforts de coupe en fonction de la position angulaire de l'outil autour de l'axe du tunnelier, telle que celle de la figure 7, permet d'évaluer ces efforts et de discerner les zones du front de taille où ils sont les plus importants.

Un traitement informatique des signaux permet de définir, sur le front de taille, des zones où le couple des forces Fp et Fc a sensiblement la même valeur et de déterminer la valeur moyenne de ces forces dans chacune des zones. Les théories géotechniques connues permettent de déterminer, pour chacune de ces zones, les caractéristiques, telles que la cohésion, l'angle de frottement interne ou la résistance à la compression du terrain.

Pour mesurer la résistivité du terrain dans le voisinage immédiat de l'outil 20, on utilise le système représenté sur la figure 8. Dans ce système, on utilise l'outil 20 comme électrode en isolant le support 26 de la masse du tunnelier et en le reliant à l'une des bornes d'une source de courant 36 dont l'autre borne est reliée à une électrode 38 implantée dans le sol à l'avant du tunnelier ; I'électrode 38 peut être l'une des électrodes 14a du système de mesure des résistances autour du tunnelier. Un ampèremètre 40 permet de mesurer l'intensité du courant circulant dans ce circuit. Un voltmètre 42 est branché entre le support 26 et la masse du tunnelier. L'intensité du courant peut aussi être mesurée au moyen d'un transformateur de courant constitué par une bobine 44 placée autour de l'outil 20 et associé à un ampèremètre 40'.

A partir de ces mesures on établit une relation entre la résistivité du terrain sur le front de taille et ses caractéristiques géotechniques et on utilise cette relation pour déterminer, à partir des cartes d'iso-résistivité établies comme décrit ci-dessus, les caractéristiques des terrains à l'avant du tunnelier.

## Revendications

1. Procédé de reconnaissance des terrains à l'avant d'une machine d'excavation consistant à :
- mesurer la résistance du terrain à l'avant de la machine d'excavation à l'aide d'un ou plusieurs couples d'électrodes placés sur ou à proximité du tunnelier,
- établir, à partir de ces mesures, des cartes donnant des informations sur la résistivité du terrain dans différents plans, verticaux, horizontaux ou obliques, à l'avant de la machine,
- mesurer les contraintes mécaniques sur un outil de coupe de la machine d'excavation, et déduire de ces mesures les caractéristiques géotechniques du terrain sur le front de taille,
- mesurer la résistivité du terrain au voisinage immédiat de l'outil de coupe,
- établir une ou plusieurs relations entre la résistivité du terrain sur le front de taille et ses caractéristiques géotechniques, et
- déterminer les caractéristiques géotechniques du terrain à l'avant de la machine, dans la zone séparant celle-ci des électrodes, en appliquant la ou lesdites relations aux informations données par lesdites cartes.

2. Système pour la mise en oeuvre du procédé selon la revendication 1, caractérisé en ce qu'il comporte :
- un dispositif pour mesurer la résistance électrique du terrain à l'avant de la machine d'excavation ;
- un dispositif pour mesurer les contraintes mécaniques sur un outil de coupe de la machine d'excavation ;
- un dispositif pour mesurer la résistivité du terrain en voisinage immédiat dudit outil de coupe, et
- un système informatique comprenant :
- un premier sous-système pour l'établissement des cartes d'iso-résistivité à partir des mesures de résistance du terrain ;
- un deuxième sous-système pour déterminer les caractéristiques géotechniques du terrain sur le front de taille, à partir des mesures de contraintes mécaniques sur l'outil de coupe ;
- un troisième sous-système permettant d'établir une ou plusieurs relations entre la résistivité du terrain sur le front de taille et ses caractéristiques géotechniques, et
- un quatrième sous-système permettant de déterminer les caractéristiques géotechniques du terrain à l'avant du tunnelier à partir des cartes d'iso-résistivité, en utilisant la ou lesdites relations.
